# EUROPEAN PATENT SPECIFICATION

(11) **EP 3 021 785 B1**
(45) Date of publication and mention of the grant of the patent: **12.02.2020**
(21) Application number: 14825733.0
(22) Date of filing: 16.07.2014
(51) Int. Cl.: A61C 8/00

(54) **DENTAL IMPLANT INSERT ADAPTOR**
ZAHNIMPLANTAT-EINSATZADAPTER
ADAPTATEUR D'INSERTION D'IMPLANT DENTAIRE

(30) Priority: 16.07.2013 US 201361846642 P
(43) Date of publication of application: 25.05.2016
(73) Proprietor: Honig, Iulian, 050104 Bucharest (RO)
(72) Inventor: Honig, Iulian, 050104 Bucharest (RO)
(74) Representative: Harrison IP Limited
(86) International application number: PCT/IL2014/050643
(87) International publication number: WO 2015/008284

(56) References cited:
- WO-A1-2004/037110
- WO-A1-2010/088754
- WO-A2-2013/014643
- FR-A1- 2 733 144
- US-A1- 2007 037 123
- US-A1- 2010 196 853
- US-A1- 2011 097 688
- US-A1- 2011 223 562
- US-A1- 2012 270 179
- US-A1- 2013 017 513

## Description

### FIELD OF THE INVENTION

The present invention relates to multi-piece dental implants comprising an anchor and abutment assembly and in particular, to an insert adaptor that provides a single position one-way coupling platform.

### BACKGROUND OF THE INVENTION

Dental implants are known in the art and typically include a dental anchor, an abutment and a prosthodontic restoration. The dental anchor is securely inserted into the patient's jawbone, the abutment member is attached to the anchor and utilized to interface and couple with the prosthodontic restoration to the anchor.

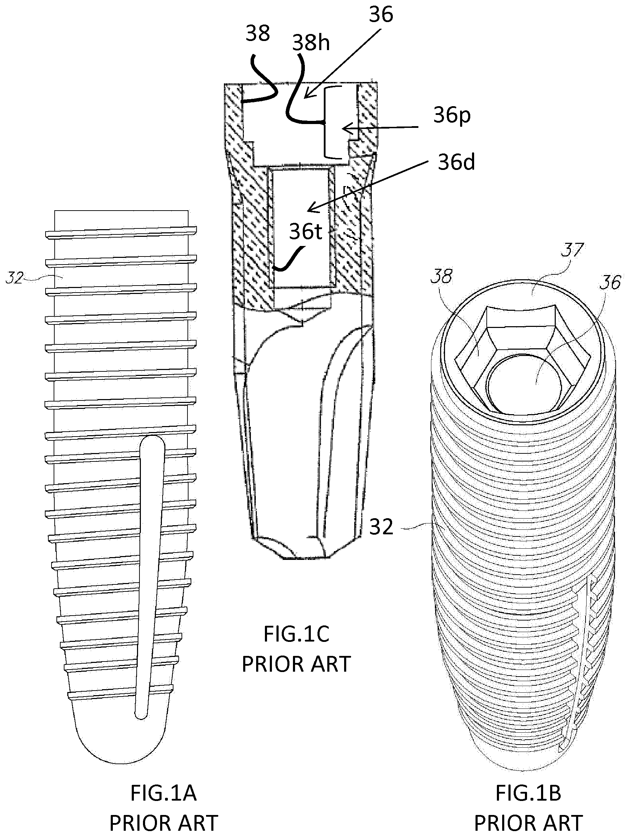

Prior art and/or off the shelf implant anchors, for example as show FIG 1A-C, are screw form implants (32) that are inserted into the jawbone, mandible and/or maxilla, and used to replace a dental tooth. The implant anchor (32) comprise an anti-rotation coupling interface 38 to facilitate tooling of the anchor so as to allow for inserting the implant anchor into the jawbone. The anti-rotation coupling interface 38 is also serves for coupling an abutment thereto in a number of configuration and/or positions while preventing the rotation of the abutment within the anchor implant 32. Therefore the coupling interface 38, shown in the form of an internal hex interface provides for coupling an abutment in up to six positions and therefore exemplifies one form of a multi-position coupling interface. Such multi-position anti-rotational interfaces 38 are commonplace and greatly vary between manufacturers. Such coupling interfaces that are known in the art include : internal six receptor sockets, scalloped, internal dodecagon, external hex, internal hex, internal octagon, external octagon, external spline, external morse taper, internal morse taper, internal six lobe, internal tri lobe, internal six spline, internal thread, internal pentagon, external thread, internal square, external square, internal five lobe, internal four lobe, internal three spline, external triangle, internal eight spline, external six lobe, internal eight lobe, internal tube to tube and plug in.

The coupling interface allows the abutment to be placed in a plurality of positions. For example, as its name suggests an "internal hex", as shown in FIG. 1A-B, refers to a hexagonal interface that allows the abutment to be placed in six different positions relative to the anchor's axis. Such an "internal hex" interface is described in US Patent No. 4,960,381 to Niznick.

The various anchor coupling interfaces 38, (for example as shown in FIG. 1A-B), provide physicians some degrees of freedom to allow them to position the abutment in various position and orientation relative to the morphological and clinical situation. However, recent technological and digital medical imagery developments have found their way to dental implant technology. Medical imagery technique such as CT scans and improved computer technology and image processing has contributed to the development of individualized and/or customized dental abutments.

Individualized and/or customized abutments are designed and produced with computer assistance design (CAD) and computer assisted manufacturing (CAM) tools and technology generally referred to as CAD/CAM. CAD/CAM tools are utilized to design and manufacture customized and/or individualized abutments for a specific patient based on the medical imagery of the patient so as to best suit the patient from a clinical and anatomical perspective. Such individualized abutments are designed to couple with standard prefabricated anchors such as those depicted in FIG. 1A-C.

WO 2013/014643 A2 discloses a dental implant anchor insert adapter, which is configured to convert a multi position coupling platform disposed on an off the shelf dental implant anchor to a single position one-way coupling platform.

A problem arises when coupling a customized dental implant abutment to a state of the art prefabricated anchor because there is no manner by which a practitioner can ensure the correct coupling orientation of the abutment to the anchor so as to allow the customized abutment to assume its intended orientation, to best suit the patient from a clinical and anatomical perspective. This problem is primarily due to the fact that the off the shelf implant 32 utilized having a coupling platform 38 is a multi-position coupling interface such that the practitioner has a one in six chance is choosing the correct abutment orientation and no guarantee that the right orientation will be selected.

As discussed above state of the art (off the shelf) implant anchors 32 are provided with a coupling interface 38 that allows an abutment to be placed and coupled in a plurality of positions.

Accordingly, prior art anchor's coupling interfaces, for example the internal hex interface 38 of FIG. 1A-C, provides many abutment to anchor coupling positions and cannot ensure that a customized and/or individualized abutment is oriented and mounted onto the anchor in its pre-planned and/or intended position.

Specifically prior art anchor's coupling interfaces, for example the internal hex 38 shown in FIG. 1A, provide a practitioner with multiple positions, specifically six, with which a customized and/or individualized restoration and/or abutments may be placed. With such multi-position coupling interfaces, a practitioner does not have a way to ensure the correct placement and positioning of a customized abutment and/or restoration on the standard off the shelf implant according to having prior art multi-position coupling interfaces.

The present invention overcomes the deficiencies of prior art implant anchors by providing an insert adaptor configured to convert a multi-position connection platform into a single position one-way coupling platform therein allowing off the shelf implant anchors to be used with individualized and/or customized implant abutments.

### SUMMARY OF THE INVENTION

The present invention pertains to a dental implant anchor insert adapter as defined in claims 1 to 7.

The present invention provides a dental implant anchor insert adaptor provided to convert a multi position coupling platform disposed on an off the shelf dental implant anchor to a single position one-way coupling platform the insert adaptor is configured to fit within at least a proximal portion of an off the shelf implant borehole where the multi-position coupling platform is defined, the insert adaptor features a substantially tubular body defining a distal end, a proximal end, an external surface and an internal surface; the external surface are configured to correspond to and securely fit with a multi position coupling platform of an off the shelf implant anchor; the inner surface is configured to define a single position one-way coupling platform.

The single position one-way coupling platform (738) is configured to correspond to and couple with a single position one-way coupling platform disposed on a prosthodontic element, selected from the group consisting of: impression coping, implant abutment, a personalized implant abutment, fixation screw, a CAD/CAM personalized implant abutment, a manually customizable abutment assembly, healing abutment, healing cap, cover screw, or the like.

Within the context of this application the terms individually customizable, adjustable and/or customizable dental implant systems, interchangeably refer to an adjustable and customizable implant system particularly an abutment assembly, as described in a co-owned and pending PCT Application No PCT/ IB2012/053829.

Within the context of this application the terms CAD/CAM personalized, CAD/CAM individualized, CAD/CAM manufactured and/or CAD/CAM customized, dental abutment or restoration, interchangeably refer to a dental implant abutment and/or restoration that is designed and manufactured for a specific individual (patient) based on medical imaging, computer tomographic images (CT), and CAD/CAM technologies as is known in the art.

Within the context of this application the terms one-way coupling platform and/or one-position coupling platform and/or single position coupling platform or combinations thereof may be used interchangeably to refer to a platform or interface that only allows a specific one to one coupling between an implant anchor and abutment and/or abutment assembly member. The single position one-way coupling platform allows for specific and/or individualized position, orientation and direction of an abutment, or a CAD/CAM personalized abutment or an individually adjustable abutment assembly with respect to the implant anchor.

Unless otherwise defined, all technical and scientific terms used herein have the same meaning as commonly understood by one of ordinary skill in the art to which this invention belongs. The materials, methods, and examples provided herein are illustrative only and not intended to be limiting.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1A-C are schematic illustration of PRIOR ART dental implant anchors and coupling interface;
FIG. 2A-2F are schematic illustrations of optional implant anchor insert adaptors according to optional embodiments of the present invention; and
FIG. 3A-3C are schematic illustrations of optional elongated implant anchor insert adaptors according to optional embodiments of the present invention.

### DESCRIPTION OF THE PREFERRED EMBODIMENTS

The principles and operation of the present invention may be better understood with reference to the drawings and the accompanying description.

The following figure reference labels may be used throughout the description to refer to similarly functioning components are used throughout the specification hereinbelow:
- 32: off the shelf / prior art anchor;
- 36: anchor borehole;
- 36d: borehole distal portion;
- 36p: borehole proximal portion;
- 36t: anchor bore threading;
- 37: beveled surface;
- 38: multi-position coupling interface;
- 702a,b: proximal one-way coupling member;
- 704: male single position one-way coupling member;
- 706: female single position one-way coupling member;
- 710: insert adaptor short single position one-way coupling platform;
- 712: insert adaptor external surface;
- 712d: external surface distal portion;
- 712h: insert adaptor length;
- 714: insert adaptor inner surface;
- 716: insert adaptor proximal end;
- 718: insert adaptor distal end;
- 718r: distal end rim/flange;
- 720: insert adaptor long single position one-way coupling platform;
- 720d: distal portion;
- 720e: external surface;
- 720i: internal surface;
- 720p: proximal portion;
- 722: internal threading;
- 724: long insert coupling member;
- 736: anchor borehole;
- 736d: borehole distal portion;
- 736p: borehole proximal portion;
- 736t: borehole threading;
- 738: one-way coupling interface;
- 738h: coupling platform length;

FIG.1A-C shows various off the shelf prior art dental anchors 32 having a multi-position coupling interface 38 that serves both as an anti-rotational tooling surfacing and as a coupling interface for coupling implant abutments. Dental anchors 32 are screw-type dental implants comprising an externally-threaded, preferably self-tapping, body portion, for example as shown in FIG. 1A-B. The implant has engaging means for carrying and/or screwing and inserting the implant into an opening formed in bone tissue to receive the implant, as shown in FIG. 1B-C, in the form of an "internal hex" coupling platform configuration 38. The internal hex 38 facilitates both inserting anchor 32 into the jaw and for coupling an abutment thereto. Insertion of anchor 32 utilizing internal hex configuration 38 is facilitated with a corresponding tool such as a hex wrench, while they provide six different positions with which an abutment may be coupled.

The opening of the internal hex configuration 36 may also comprise leading beveled surface 37 allowing frictional sealing

FIG. 1C shows a longitudinal section through the length of anchor 32 revealing the length of an internal anchor bore 36 that includes a proximal portion 36p, a distal portion 36d and threading 36t along the surface of distal portion 36d. Threading 36t provides for interfacing with a locking screw that facilitates coupling anchor 32 with optional prosthodontic elements such as impression coping, abutments, abutments assemblies, restorations and the like in a secure manner utilizing a locking screw.

Such off the shelf and/or state of the art implant anchors are made of titanium or alloys thereof.

However, the introduction of adjustable and/or customizable dental implant abutment assembly and CAD/CAM facilitated individualized dental abutments and restorations, has surfaced a problem with such prior art and/or off the shelf implant anchors 32, such as those depicted in FIG. 1A-C, particularly with respect to the anchor's coupling platform 38. The problem with prior art coupling platforms 38 lays in that the available coupling interfaces provides multiple positions and orientation with which to couple the anchor to an abutment assembly and the restoration mounted thereon.

Accordingly, prior art anchors 32 and coupling interfaces 38 do not provide for ensuring that an abutment, an adjusted and/or customized and/or CAD/CAM individualized abutment, and the restoration mounted on the abutment, would be oriented and positioned according to clinical and/or morphological requirements for which they were designed.

Specifically prior art anchor's 32 having multi-position coupling interfaces, for example the internal hex 38 shown in FIG. 1A, provide multiple positions and/or orientations, specifically there are six positions in which a customized and/or CAD/CAM individualized abutment and/or restoration may be positioned with the anchor's coupling interface. Such customized and/or CAD/CAM individualized, abutments and restorations do not need multiple positioning options as the abutment and restoration are customized according to the specific clinical and morphological situation of a patient such that they are manufactured to assume the planned orientation and/or position within the jaw.

Accordingly, coupling interfaces 38 of prior art anchors 32, increase the likelihood of a mismatches and/or misalignment of an individually customized restoration dental implant systems, and CAD/CAM facilitated individualized abutment about prior art anchor 32. Therefore off the shelf implant anchors having a multi-position coupling platform increase the likelihood of placing a customized abutment assembly or a CAD/CAM individualized abutment in an incorrect clinical position, as at times the differences between individual positions are very subtle and not necessarily readily visible to the practitioner.

Prior art multi-position coupling interfaces may include any of the following interfaces: internal six receptor sockets, scalloped, internal dodecagon, external hex, internal hex, internal octagon, external octagon, external spline, external morse taper, internal morse taper, internal six lobe, internal tri lobe, internal six spline, internal thread, internal pentagon, external thread, internal square, external square, internal five lobe, internal four lobe, internal three spline, external triangle, internal eight spline, external six lobe, internal eight lobe, internal tube to tube and plug in. Each of these prior art coupling interfaces include at least two or more optional positions with which an anchor may be coupled to an abutment assembly and accordingly cannot ensure proper positioning of a customized or an individualized abutment assembly with an anchor.

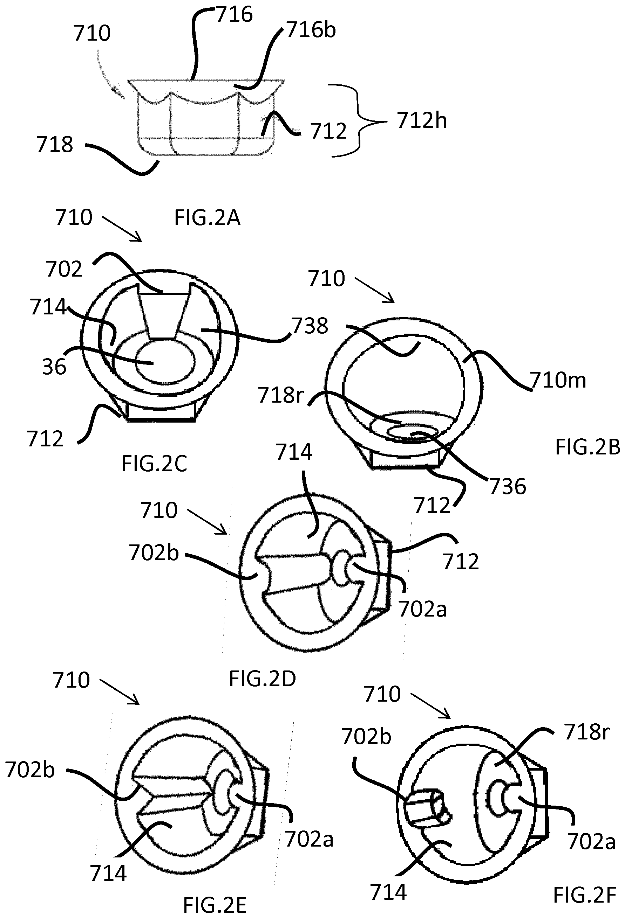

Now referring to FIG. 2-3 showing embodiments relating to dental implant inserts according to the present invention that provide for converting multi-position coupling interfaces and/or platforms 38 provided on off the shelf implant anchors 32, (FIG. 1A-C), to a single position one way coupling platform. Optionally the single position coupling platform may be any single position one way coupling platform, however more preferably the inserts feature single position one-way coupling platform 738.

FIG. 2A-E each show an optional embodiment of a dental implant anchor insert adaptor 710 that provides for converting coupling interface of an off the shelf implant anchor to a single position one-way coupling interface along the proximal portion 36p of borehole 36, therein forming a short insert adaptor.

Optionally the length of the insert of adaptor 712h, FIG. 2A, preferably corresponds to the length of the connection platform 38h formed within the proximal portion 36p of borehole 36 of off the shelf implant 32, as shown in FIG. 1C.

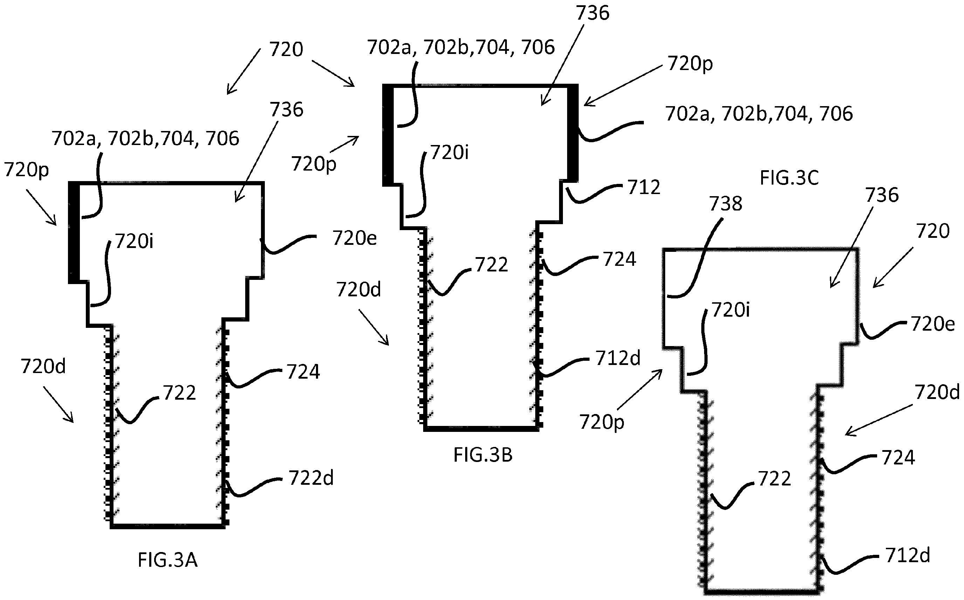

FIG. 3A-C show optional embodiments of insert adaptors 720 that are provided to fit the length of borehole 36 of an off the shelf implant anchor 32 to convert the coupling platform from a multi-position to a single position connection platform.

The dental implant anchor insert adaptor 710,720 is provided to convert a multi-position coupling platform 38 disposed on an off the shelf dental implant anchor 32 to a single position one-way coupling platform 738, as previously described.

The insert adaptor 710 is configured to fit within at least the proximal portion 36p of borehole 36 wherein the coupling platform 38 is defined. Most preferably insert adaptor 710 has a substantially tubular body defining a distal end 718, a proximal end 716, an external surface 712 and an internal surface 714. The external surface 712 is configured to correspond to and securely fit with a multi position coupling platform 38 while inner surface 714 is configured to define a single position one-way coupling platform, more preferably the one way coupling platform 738 according to embodiments of the present invention as previously described.

Optionally and preferably distal end 718 comprises an opening that is aligned with borehole distal portion 36d of borehole 36 of off the shelf implant anchor 32. Optionally opening at distal end 718 may define a rim and/or flange 718r.

Most preferably at least a portion of external surface 712 is configured to fit and correspond to any internal or external multi-position coupling platform 38. Optionally distal portion 718 may be configured to fit and correspond to any external multi-position coupling platform.

Optionally external surface 712 may be configured to fit and securely couple with any internal or external single position coupling platform.

Optionally insert adaptor 710, 720 may be configured to convert any internal multi position coupling platform 38 to any internal single position one way coupling platform, and more preferably the one way coupling platform 738 according to optional embodiments of the present invention.

Optionally insert adaptor 710, 720 may be configured to convert an internal multi position coupling platform 38 to an external single position one way coupling platform.

Optionally insert adaptor 710,720 may be coupled with an off the shelf dental implant anchor 32 along external surface 712 by way of securely coupling external surface 712 with the surface of a multi position coupling platform 38 using a biocompatible adhesive material between the surfaces 712, 38. Optionally the adhesive material may include but is not limited to adhesives, dental cement, or the like biocompatible adhesive materials.

Optionally insert adaptor 710 may be coupled with said off the shelf dental implant anchor 32 with a fixation screw.

Optionally insert adaptor 710 may further comprise an internal rim and/or flange 718r that is defined along the edge of the internal surface 714 adjacent to distal end 718, for example as shown in FIG. 2B, 2F. Optionally flange 718r may be utilized as a surface to affix, press and/or couple insert 710 to the internal borehole 36 at proximal portion 36p to facilitate coupling therewith.

Optionally insert adaptor 710 may comprise a beveled surface 716b adjacent to proximal end 716, for example as shown in FIG. 2A. Preferably beveled surface 716b is configured to correspond to a beveled surface 37 disposed adjacent to the proximal portion of the multi-position coupling platform 38 off the shelf implant anchor 32, as shown FIG. 1B.

FIG. 2A depicts a side view of a short single position one-way coupling platform insert adaptor 710 that provides for converting and/or transforming and/or switching the prior art coupling interface 38 of an off the shelf implant anchor 32 to a single position one-way coupling interface 738 that is disposed about borehole proximal portion 736p. Most preferably insert 710 comprises an external surface 712, defining a length 712h that corresponds to coupling interface 38 of anchor 32, for example as shown in FIG. 1B. Adaptor 710 comprises proximal end 716, distal end 718, and internal surface 714.

Most preferably external surface 712 may be affixed and securely coupled with coupling interface 38 with optional materials for example including but not limited to adhesives, cement, or the like biocompatible cementing ,adhesive materials.

Optionally insert 710 may be coupled to a prior art anchor 32 about coupling interface 38 by friction or the like mechanical and/or chemical means for securely coupling external surface 712 to coupling interface 38 about borehole 36.

FIG. 2B shows an optional insert adaptor 710 where inner surface 714 defines a single position one-way coupling interface. Preferably the single position one-way coupling platform 738 is characterized in that it is a continuous curved surface, defining an irregular circle having up to one line of symmetry. Optionally up to about 50% of curved surface forming the connection platform 738 is a continuous curved surface having a constant radius.

Optionally and preferably the continuous curved surface forming platform 738 defines an oval having up to one line of symmetry. Optionally and more preferably the oval platform 738 defines an egg shaped oval.

Optionally curved surface 738 is configured to provide an implant margin 710m of at least 0.3mm.

FIG. 2C shows an optional insert adaptor 710 having one coupling member 702 that defines a single position one-way coupling interface along internal surface 714.

FIG. 2D-F show perspective views of optional short insert 710 revealing the one-way coupling interface 738 formed by two optional coupling members 702a, 702b disposed opposite one another as previously described. FIG. 2D shows an insert 710 where both coupling member 702a,b have a cylindrical form of different size, where member 702a has a smaller diameter than that of coupling member 702b. Most preferably the differently sized coupling members 702a,b are provided so as to ensure a single position one way coupling platform is formed along the internal surface 714 of insert 710.

FIG. 2E shows an insert adaptor 710 having a first coupling member 702a in the cylindrical form while a second opposing coupling member 702b is provided with a triangular profile, therein the coupling members 702a,b are configured so as to allow only one way coupling with the single position coupling platform 738 by utilizing differently shaped coupling member.

FIG. 2F shows a further optional insert adaptor 710 where coupling member 702a is configured to take the form of a male configuration relative to inner surface 714 while coupling member 702b is configured to take the form of a female coupling member relative to inner surface 714 wherein coupling member 702b is in the form of an indentation along inner surface 714 to form an option a single position one-way interface 738.

FIG. 3A-C depicts a side view of a long one-way coupling platform insert 720 that provides for converting and/or transforming and/or switching the prior art borehole 36 about all of its portion distal 36d, proximal 36p and coupling interface 38 to optional one-way coupling interface 738 disposed about at least one of borehole proximal portion 736p and/or distal portion 736d.

Most preferably insert adaptor 720 comprises an external surface 720e, an internal surface 720i, a proximal portion 720p and a distal portion 720d.

Preferably external surface 720e is configured to match borehole 36 of off the shelf implant anchor 32. Most preferably external surface 720e disposed along proximal portion 720p is configured to correspond with be coupled with the multi-position coupling platform 38 of off the shelf implant 32 defined along the proximal portion 36p of borehole 36.

Most preferably external surface 720e disposed along distal portion 720p is configured to correspond with and coupled to the distal portion 36d of borehole 36.

Optionally external surface 720e may be affixed and securely coupled with coupling interface 38 with optional materials for example including but not limited to adhesives, cement, or the like biocompatible adhesive materials. Optionally insert 720 may be coupled to a prior art anchor 32 about coupling interface 38 by friction or the like mechanical and/or chemical means for securely coupling external surface 720e to coupling interface 38 about borehole 36.

Preferably the external surface 720e along distal portion 720d that defines a distal surface 724 is preferably provided to couple with and/or nullify prior art borehole threading 36t, shown in FIG. 1C. Optionally distal external surface 724 may be provided with the threading corresponding to borehole threading 36t. Optionally surface 724 may be provided with coupling members, graduations, scoring or the like that provide for associating with borehole threading 36t by way of an adhesive and/or cement.

Optionally and preferably long insert 720 comprises internal threading 722 that effectively replace borehole threading 36t.

Most preferably long insert may comprise at least one coupling member 702a, 702b, 704, 706, along the internal surface 720i along proximal portion 720p as previously described, to form a one-way coupling platform 738 as previously described.

FIG. 3A shows an optional embodiment of long insert 720 comprising one coupling member 702a, 702b, 704, 706, as previously described, that may be utilized to transform a prior art anchor 32 to a one-way coupling platform 738, where a multi-position coupling interface is converted to a single position one way coupling interface..

FIG. 3B shows an optional embodiment of long insert 720 comprising two coupling member 702a, 702b, 704, 706, as previously described, that may be utilized to transform the coupling interface 38 of a prior art anchor 32 to a single position one-way coupling platform 738.

FIG. 3C shows an optional embodiment of long insert 720 comprising a coupling platform 738 as previously described, that may be utilized to transform the multi-position coupling platform 38 of a prior art anchor 32 to a one-way coupling platform 738, where a multi-position coupling interface is converted to a single position one way coupling interface. Preferably the single position one-way coupling platform 738 is characterized in that it is a continuous curved surface, defining an irregular circle having up to one line of symmetry. Optionally up to about 50% of curved surface forming the connection platform 738 is a continuous curved surface having a constant radius.

Optionally and preferably the continuous curved surface forming platform 738 defines an oval having up to one line of symmetry. Optionally and more preferably the oval platform 738 defines an egg shaped oval.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A dental implant anchor insert adaptor (710) provided to convert a multi position coupling platform (38) disposed on an off the shelf dental implant anchor (32) to a single position one-way coupling platform (738), the insert adaptor configured to fit within at least the proximal portion (36p) of a borehole of said off the shelf dental implant anchor (32) wherein said multi position coupling platform (38) is defined, the insert adaptor (710) having a substantially tubular body defining a distal end (718), proximal end (716), an external surface (712) and an internal surface (714), said external surface (712) configured to correspond to and securely fit with said multi position coupling platform (38); wherein the proximal end (716) comprises a beveled surface (716b) corresponding to a beveled surface (37) disposed adjacent to the proximal portion of the multi-position coupling platform (38) of an off the shelf implant anchor (32), characterised therein that
said internal surface (714) is configured to define a single position one-way coupling platform (738).

2. The insert adaptor of claim 1 wherein the distal end (718) comprises an internal flange (718r) defined along the edge of the internal surface (714) adjacent to said distal end (718), said flange (718r) provided to facilitating coupling said insert adaptor (710) with a fixation screw.

3. The insert adaptor of claim 1 having a length (712h) corresponding to the length of the borehole (36) of said off the shelf dental implant (32), therein defining a long insert adaptor (720) having a proximal portion (720p) corresponding to the connection platform (38) of the off the shelf implant (32) and a distal portion (720d) corresponding to a borehole distal portion (32d) of the off the shelf implant (32).

4. The insert adaptor of claim 3 comprising an external surface (720e) along the length of said distal portion (720d) comprising a coupling surface (724) configured to couple over a borehole threading (36t) of said off the shelf dental implant (32).

5. The insert adaptor of claim 4 wherein said coupling surface (724) is provided in the form of a threading configured to correspond to and be threaded with a matching threading (36t) of said off the shelf implant (32).

6. The insert adaptor of claim 4 or 5 wherein the internal surface (720i) of the distal portion (720d) comprises an internal threading (722) for coupling a fixation screw.

7. The insert adaptor of claim 5 wherein said coupling surface (724) is configured to facilitate bonding of said insert (720) within the borehole (36) of said off the shelf implant anchor (32) by way of a biocompatible adhesive.

## Patentansprüche

1. Zahnimplantatankereinsatzadapter (710), der bereitgestellt ist, um eine Multipositionskopplungsplattform (38), die an einem standardmäßigen Zahnimplantatanker (32) angeordnet ist, in eine Einzelpositionseinwegkopplungsplattform (738) umzuwandeln, wobei der Einsatzadapter konfiguriert ist, sodass er zumindest in den proximalen Abschnitt (36p) eines Bohrlochs des standardmäßigen Zahnimplantatankers (32) passt, wobei die Multipositionskopplungsplattform (38) definiert ist, wobei der Einsatzadapter (710) einen im Wesentlichen rohrförmigen Körper aufweist, der ein distales Ende (718), ein proximales Ende (716), eine Außenfläche (712) und eine Innenfläche (714) definiert, wobei die Außenfläche (712) konfiguriert ist, sodass sie der Multipositionskopplungsplattform (38) entspricht und sicher damit passt; wobei das proximale Ende (716) eine abgeschrägte Fläche (716b) umfasst, die einer abgeschrägten Fläche (37) entspricht, die benachbart zu dem proximalen Abschnitt der Multipositionskopplungsplattform (38) eines standardmäßigen Implantatankers (32) angeordnet ist, **dadurch gekennzeichnet, dass** die Innenfläche (714) konfiguriert ist, sodass sie eine Einzelpositionseinwegkopplungsplattform (738) definiert.

2. Einsatzadapter nach Anspruch 1, wobei das distale Ende (718) einen Innenflansch (718r) umfasst, der entlang der Kante der Innenfläche (714) benachbart zu dem distalen Ende (718) definiert ist, wobei der Flansch (718r) bereitgestellt ist, um Kopplung des Einsatzadapters (710) mit einer Befestigungsschraube zu vereinfachen.

3. Einsatzadapter nach Anspruch 1, eine Länge (712h) entsprechend der Länge des Bohrlochs (36) des standardmäßigen Zahnimplantats (32) aufweisend, wobei darin ein langer Einsatzadapter (720) definiert ist, der einen proximalen Abschnitt (720p) entsprechend der Verbindungsplattform (38) des standardmäßigen Implantats (32) und einen distalen Abschnitt (720d) entsprechend einem distalen Bohrlochabschnitt (32d) des standardmäßigen Implantats (32) aufweist.

4. Einsatzadapter nach Anspruch 3, umfassend eine Außenfläche (720e) entlang der Länge des distalen Abschnittes (720d), die eine Kopplungsfläche (724) umfasst, die konfiguriert ist, sodass sie über ein Bohrlochgewinde (36t) des standardmäßigen Zahnimplantats (32) koppelt.

5. Einsatzadapter nach Anspruch 4, wobei die Kopplungsfläche (724) in der Form eines Gewindes bereitgestellt ist, das konfiguriert ist, sodass es einem passenden Gewinde (36t) des standardmäßigen Implantats (32) entspricht und damit gewunden ist.

6. Einsatzadapter nach Anspruch 4 oder 5, wobei die Innenfläche (720i) des distalen Abschnittes (720d) ein Innengewinde (722) zum Koppeln einer Befestigungsschraube umfasst.

7. Einsatzadapter nach Anspruch 5, wobei die Kopplungsfläche (724) konfiguriert ist, sodass sie Bindung des Einsatzes (720) innerhalb des Bohrlochs (36) des standardmäßigen Implantatankers (32) mittels eines biokompatiblen Klebstoffes vereinfacht.

## Revendications

1. Adaptateur d'insert d'ancrage d'implant dentaire (710) conçu pour convertir une plateforme d'accouplement multi-position (38) agencée sur un ancrage d'implant dentaire standard (32) en une plateforme d'accouplement unidirectionnelle à position unique (738), l'adaptateur d'insert configuré pour s'ajuster à l'intérieur d'au moins la partie proximale (36p) d'un forage dudit ancrage d'implant dentaire standard (32) dans lequel ladite plateforme d'accouplement multi-position (38) est définie, l'adaptateur d'insert (710) ayant un corps sensiblement tubulaire définissant une extrémité distale (718), une extrémité proximale (716), une surface externe (712) et une surface interne (714), ladite surface externe (712) configurée pour correspondre à et s'ajuster de manière sécurisée à ladite plateforme d'accouplement multi-position (38) ;
dans lequel l'extrémité proximale (716) comprend une surface biseautée (716b) correspondant à une surface biseautée (37) agencée adjacente à la partie proximale de la plateforme d'accouplement multi-position (38) d'un ancrage d'implant standard (32), **caractérisé en ce que**
ladite surface interne (714) est configurée pour définir une plateforme d'accouplement unidirectionnelle à position unique (738).

2. Adaptateur d'insert selon la revendication 1, dans lequel l'extrémité distale (718) comprend une bride interne (718r) définie le long du bord de la surface interne (714) adjacente à ladite extrémité distale (718), ladite bride (718r) conçue pour faciliter l'accouplement dudit adaptateur d'insert (710) avec une vis de fixation.

3. Adaptateur d'insert selon la revendication 1, ayant une longueur (712h) correspondant à la longueur du forage (36) dudit implant dentaire standard (32),
dans lequel la définition d'un adaptateur d'insert long (720) ayant une partie proximale (720p) correspondant à la plateforme de connexion (38) de l'implant standard (32) et une partie distale (720d) correspondant à une partie distale d'alésage (32d) de l'implant standard (32).

4. Adaptateur d'insert selon la revendication 3, comprenant une surface externe (720e) le long de la longueur de ladite partie distale (720d) comprenant une surface d'accouplement (724) configurée pour s'accoupler au-dessus d'un filetage de forage (36t) dudit implant dentaire standard (32).

5. Adaptateur d'insert selon la revendication 4, dans lequel ladite surface d'accouplement (724) est conçue sous la forme d'un filetage configuré pour correspondre à et être fileté avec un filetage correspondant (36t) dudit implant standard (32).

6. Adaptateur d'insert selon la revendication 4 ou 5, dans lequel la surface interne (720i) de la partie distale (720d) comprend un filetage interne (722) destiné à s'accoupler à une vis de fixation.

7. Adaptateur d'insert selon la revendication 5, dans lequel ladite surface d'accouplement (724) est configurée pour faciliter la liaison dudit insert (720) à l'intérieur du forage (36) dudit ancrage d'implant standard (32) au moyen d'un adhésif biocompatible.
